## Europäisches Patentamt
## European Patent Office
## Office européen des brevets

(19)

(11) Numéro de publication: **0 057 406**
**A2**

(12) **DEMANDE DE BREVET EUROPEEN**

(21) Numéro de dépôt: 82100512.1

(22) Date de dépôt: **26.01.82**

(51) Int. Cl.³: **C 04 B 35/10, H 01 M 10/39**

(30) Priorité: **30.01.81 FR 8101807**

(43) Date de publication de la demande: **11.08.82**
**Bulletin 82/32**

(84) Etats contractants désignés: **AT BE CH DE FR GB IT LI LU NL SE**

(71) Demandeur: **COMPAGNIE GENERALE D'ELECTRICITE Société anonyme dite:, 54, rue La Boétie, F-75382 Paris Cedex 08 (FR)**

(72) Inventeur: **Desplanches, Gérard, 6, Résidence Les Rieux, F-91120 Palaiseau (FR)**
Inventeur: **Gourier, Didier, 5, rue Mignon, F-75006 Paris (FR)**
Inventeur: **Wicker, Alain, 12, Place du Panthéon, F-75005 Paris (FR)**

(74) Mandataire: **Weinmiller, Jürgen et al, Zeppelinstrasse 63, D-8000 München 80 (DE)**

(54) Composition d'alumine bêta alcaline, notamment pour générateurs électrochimiques sodium-soufre.

(57) Composition d'alumine béta alcaline, notamment pour générateurs électrochimiques sodium-soufre.

Cette composition est caractérisée par le fait qu'elle comporte en outre un composé notamment un oxyde d'au moins un élément de transition en proportion pondérale comprise entre 10 et 1000 parties par million par rapport au poids total de matériau, ledit élément de transition étant choisi de préférence parmi le fer, le cobalt, le nickel et le manganèse.

L'invention est mise en œuvre comme électrolyte solide dans les générateurs sodium-soufre pour traction électrique.

Composition d'alumine béta alcaline, notamment pour générateurs électro-chimiques sodium-soufre

La présente invention concerne une composition d'alumine béta alcaline pour générateurs électrochimiques sodium-soufre.

On sait que les alumines béta alcalines et notamment l'alumine béta-sodique trouvent à l'heure actuelle d'importantes applications en tant qu'électrolyte solide dans de tels générateurs.

Cependant dans les générateurs mettant en oeuvre des électrolytes solides confectionnés en alumines béta alcalines de compositions conventionnelles, on s'aperçoit à l'issue d'un certain nombre de cycles charge-décharge que la quantité théorique de courant de recharge du générateur devient supérieure à la quantité de courant nécessaire.

Un tel phénomène qui résulte de pertes faradiques par conduction électronique au niveau dudit électrolyte est un signal qui annonce la mise hors service du générateur.

L'invention a pour but de pallier ces inconvénients.

On a donc recherché à éliminer un tel phénomène par addition dans les compositions classiques d'alumines béta alcalines, d'éléments aptes à éviter au maximum toute conductivité électronique au sein de telles alumines et, au contraire, à y favoriser exclusivement une conduction du type ionique.

L'invention a donc pour objet une composition d'alumine béta alcaline notamment pour électrolyte solide mis en oeuvre dans les générateurs sodium-soufre, caractérisée par le fait qu'elle comporte en outre un composé d'au moins un élément de transition en proportion pondérale comprise entre 20 et 1000 parties par million par rapport au poids total de matériau.

Ledit élément de transition est de préférence choisi dans le groupe comportant le fer, le cobalt, le nickel et le manganèse.

L'invention sera décrite ci-après plus en détail à l'aide d'un exemple de mise en oeuvre préféré.

Conformément à l'invention on introduit dans l'alumine béta alcaline un composé d'au moins un élément de transition en proportion pondérale comprise entre 20 et 1000 parties par million du poids total de matériau.

De préférence, ledit élément de transition est choisi dans le groupe comportant le fer, le cobalt, le nickel et le manganèse.

Cet élément de transition est de préférence introduit sous forme d'oxyde lors du mélange des produits de départ.

Pour fixer les idées la préparation de telles pièces sera effectuée par exemple selon les phases successives suivantes :

- on réalise un mélange intime de poudres d'alumine, de carbonate alcalin, par exemple de sodium de telle sorte que l'on obtienne un rapport $\frac{Al_2O_3}{Na_2O}$ prédéterminé et d'oxyde d'un élément de transition par exemple de l'oxyde de nickel en proportions de 1000 parties par million du poids total du matériau,

- on chauffe en creuset ouvert ledit mélange intime.
- on laisse refroidir librement ledit mélange.
- on broie la poudre ainsi obtenue.
- on procéde à la mise en forme des pièces, par exemple de tubes - on réalise le frittage desdites pièces par exemple à une température comprise entre 1600 et 1700° pouvant être maintenue entre 30 minutes et 4 heures.

On peut également à titre nullement limitatif remplacer l'oxyde de nickel par de l'oxyde de cobalt en proportion de 50 parties par million du poids total de matériau.

Les pièces d'électrolyte solide selon l'invention assurent une durée de vie très élevée des générateurs sodium-soufre dans lesquels elles sont mises en oeuvre.

Pour fixer les idées, un générateur sodium-soufre dans lequel on utilise un électrolyte en alumine béta sodique conventionnelle se révéle défaillant à l'issue de 7 jours de cycles charge-décharge intensifs.

Au contraire, des générateurs dans lesquels on met en oeuvre des électrolytes en alumine selon l'invention conservent leurs caractéristiques initiales à l'issue de 10 jours, toutes choses égales par ailleurs.

L'invention est avantageusement mise en oeuvre dans les générateurs sodium-soufre pour traction électrique.

0057406

REVENDICATIONS

1/ Composition d'alumine béta alcaline notamment pour électrolyte solide mis en oeuvre dans des générateurs sodium-soufre, caractérisée par le fait qu'elle comporte en outre un composé d'au moins un élément de transition en proportion pondérale comprise entre 20 et 1000 parties par million par rapport au poids total de matériau.

2/ Composition selon la revendication 1, caractérisée par le fait que ledit élément de transition est de préférence choisi dans le groupe comportant le fer, le cobalt, le nickel et le manganèse.

3/ Composition selon l'une des revendications 1 et 2, caractérisée par le fait que ledit composé est un oxyde.

4/ Générateur électrochimique sodium-soufre comportant un électrolyte présentant une composition selon l'une des revendications 1 à 3.